# EUROPÄISCHE PATENTANMELDUNG

(11) **EP 2 458 718 A2**
(43) Veröffentlichungstag der Anmeldung: **30.05.2012**
(21) Anmeldenummer: 11186507.7
(22) Anmeldetag: 25.10.2011
(51) Int. Cl.: H02K 7/116

(54) **Elektromotor, insbesondere Heckwischermotor**

(30) Priorität: 29.11.2010 DE 102010062128
(71) Anmelder: Robert Bosch GmbH, 70442 Stuttgart (DE)
(72) Erfinder: Albrecht, Gerard, 67690 Hatten (FR); Reith, Michael, 77815 Buehl-Vimbuch (DE)

(57) **Zusammenfassung**

Es ist bekannt für einen Elektromotor, insbesondere einen Heckwischermotor, die Getriebelagerstellen einzeln im Getriebegehäuse vorzusehen.

Zur Erhöhung der Steifigkeit und um das Lagerspiel der Antriebswelle zu verringen, wird vorgeschlagen, dass bei einem Elektromotor, insbesondere Heckwischermotor, mit einer Abtriebswelle und mit einem Getriebegehäuse (1) mit Lagerstellen (3, 4, 5), ein im Getriebegehäuse (1) eingebundenes, gemeinsames Lagerbauteil (10) die Lagerstellen (3, 4, 5) im Getriebegehäuse (1) bildet.

Die Erfindung ist für Elektromotoren, insbesondere für Heckwischermotoren für Kraftfahrzeuge, vorgesehen.

## Beschreibung

### Stand der Technik

Die vorliegende Erfindung betrifft einen Elektromotor, insbesondere Heckwischermotor, mit einer Abtriebswelle und mit einem Getriebegehäuse mit Lagerstellen.

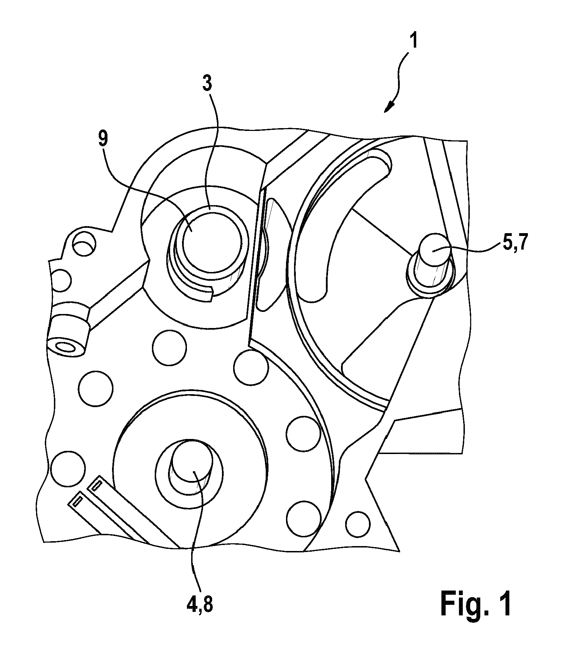

Wie in der Figur 1 dargestellt, sind für einen Elektromotor, insbesondere einen Heckwischermotor, die Getriebelagerstellen, wie für ein Stirnrad bzw. Schneckenrad und ein Getrieberitzel, bisher durch im Getriebegehäuse eingespritzte Lagerbolzen verwirklicht. In einer Lagerstelle der Abtriebswelle in einer Aufnahmeöffnung des Getriebegehäuses bzw. in einer hülsenförmigen Aufnahme für die Abtriebswelle ist außerdem ein Zylinderlager eingepresst. Da die Lagerung der Abtriebswelle an ihrer Lagerstelle im Getriebegehäuse stark beansprucht wird, ist es von Bedeutung, das axiale wie und auch das radiale Spiel an der Abtriebswelle möglichst gering zu halten.

### Offenbarung der Erfindung

Der erfindungsgemäße Elektromotor, insbesondere Heckwischermotor, mit den Merkmalen des Anspruchs 1 hat demgegenüber den Vorteil, dass das Spiel an der Abtriebswelle in einfacher Art und Weise gering gehalten werden kann. Außerdem ist eine hohe Genauigkeit der Lagerstellen zueinander, insbesondere auch bei hohen Lasten gegeben. Insbesondere kann die Lagerstelle für die Abtriebswelle sehr stabil ausgeführt werden, was eine Relaxation bzw. Lösen eines für die Abtriebswelle vorgesehenen Zylinderlagers ausschließt, wodurch ein zuverlässiger Betrieb sichergestellt ist. Des Weiteren ist eine vereinfachte Produktion des Elektromotors möglich.

Weitere Vorteile und vorteilhafte Ausgestaltungen der Erfindung ergeben sich aus den Unteransprüchen und der Beschreibung.

Eine einfach herzustellende und stabile Ausführung wird dadurch erzielt, dass ein gemeinsames Lagerbauteil als Blechteil ausgebildet ist, welches als Lagerstellen eine Durchgangsöffnung für die Abtriebswelle und zwei bolzenförmige Erhebungen aufweist.

Sehr vorteilhaft ist es dabei, das Lagerbauteil als Blechteil ausbilden und insbesondere die Lagerstelle für die Abtriebswelle mittels Tiefziehverfahren herzustellen.

Ein sicherer, dauerhafter Halt des Zylinderlagers für die Abtriebswelle ergibt sich dadurch, dass in der Durchgangsöffnung für die Abtriebswelle bzw. in einem Hülsenteil hierzu, das Zylinderlager verpresst ist.

Eine gute Verbindung mit dem Getriebegehäuse und damit gute Einleitung der Lagerkräfte in das Gehäuse ergibt sich durch Einbettung bzw. Umspritzung des gemeinsamen Lagerbauteils in das Getriebegehäuse.

### Zeichnung

Ein Ausführungsbeispiel der Erfindung ist in der nachfolgenden Beschreibung näher erläutert und anhand der Zeichnung weiter verdeutlicht.

Es zeigen:
Fig. 1 in perspektivischer Darstellung einen Ausschnitt des Elektromotors bzw. seines Getriebegehäuses auf die Lagerstellen ohne die Getriebeelemente und ohne die Abtriebswelle, ausgebildet nach dem Stand der Technik,
Fig. 2 in Draufsicht das erfindungsgemäße Lagerbauteil und
Fig. 3 in Seitenansicht einen Schnitt durch das erfindungsgemäße Lagerbauteil entlang einer Linie III-III in Fig. 2.

### Ausführungsform der Erfindung

Die Fig. 1 zeigt in perspektivischer Darstellung einen Ausschnitt des Elektromotors bzw. seines Getriebegehäuses 1 mit seinen Lagerstellen 3, 4, 5 ausgeführt nach dem Stand der Technik. Die Lagerstellen 3, 4, 5 dienen zur Lagerung von nicht näher dargestellten Getriebeelementen eines nicht dargestellten Umsetzgetriebes, das in bekannter Art und Weise eine in einer Abtriebswellenlagerstelle 3 eingebrachte Abtriebswelle in eine pendelartige Hin- und Herbewegung überführt. Die ebenfalls nicht dargestellte Abtriebswelle stellt eine Wischerwelle zum Antrieb eines an die Wischerwelle befestigten Scheibenwischers dar und ist in einem Zylinderlager 9 an der Abtriebswellenlagerstelle 3 gelagert.

Der Aufbau eines Umsetzungsgetriebes ist zum Beispiel wie folgt:
Eine zweite Lagerstelle 4 dient zur Aufnahme eines großen Stirnrades bzw. eines Schneckenrades, an welchem seitlich eine elektromotorisch angetriebene Schnecke zum Antrieb des Stirnrades angreift. Eine dritte Lagerstelle 5 dient zur Lagerung einer Schubstange mit einem mit Zähnen versehenen Zahnsektor bzw. eines Getrieberitzels, um über den Zahnsektor ein an der der Abtriebswelle vorgesehenes Ritzel anzutreiben. Das Zentrum des Zahnsektors ist über einen Steg drehbar mit der Abtriebswelle verbunden, welche wiederum drehfest mit dem Ritzel verbunden ist und zwar so, dass der Zahnsektor das Ritzel antreibt. Über einen Gelenkbolzen ist die Schubstange mit dem Stirnrad verbunden. Eine kurbelartige Bewegung der Schubstange wird in eine pendelnde Bewegung der Abtriebswelle umgesetzt.

Wie die Fig. 1 zeigt, sind die Getriebelagerstellen 3, 4, 5 bisher durch in das Getriebegehäuse 1 eingespritzte Lagerbolzen 7, 8 und durch eine Durchgangsbohrung 15 mit eingepresstem Zylinderlager 9 realisiert.

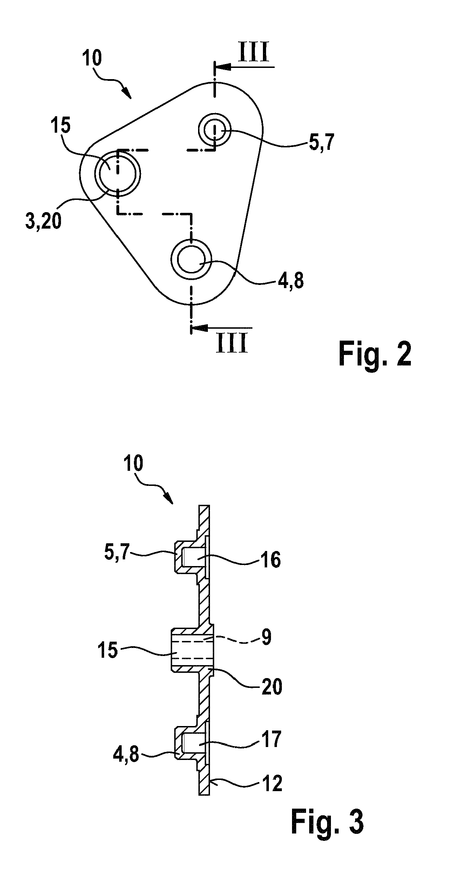

Erfindungsgemäß sollen durch ein einziges, in Fig. 2 in Draufsicht gezeigtes Lagerbauteil 10 nun alle Lagerstellen 3, 4, 5 in ein einziges, gemeinsames Bauteil integriert werden, das als Einleger bzw. Einlegeteil im Getriebegehäuse 1 umspritzt wird. Das Bauteil ist, wie die Fig. 3 in Seitenansicht eines Schnitts durch das erfindungsgemäße Lagerbauteil 10 entlang einer Linie III-III in Fig. 2 gezeigt, als Lagerblech ausgebildet, welches als Einleger bzw. Einlegeteil dann in das Getriebegehäuse 1 nach Fig. 1 integriert bzw. durch Umspritzen in das aus Kunststoff ausgeführte Getriebegehäuse 1 eingebunden wird. Durch die Steifigkeit des Lagerblechs 10 ist eine sehr genaue Position der Lagerstellen 3, 4, 5 zueinander erzielbar, die auch unter Last eingehalten wird.

Wie die Fig.2 zeigt, hat das Lagerbauteil 10 eine dreieckförmige Außenform. Etwa im Eckbereich ist ein Hülsenteil 20 ausgeformt, welcher die Durchgangsöffnung 15 bildet. Wie in Fig. 3 gezeigt, steht der Hülsenteil 20 von einer Grundebene 12 nach links ab. Auch die zwei Lagerbolzen 7, 8 stehen nach links ab, wobei die ausprägende Breite in etwa der Breite des Hülsenteils 20 entspricht. Die stift- oder bolzenförmigen Ausprägungen bzw. Erhebungen 7, 8 können durch Tiefziehen oder durch Prägen aus dem Lagerblech 10 geformt sein, wobei entsprechende Hohlräume 16, 17 ausgespart sind. Die Lagerbolzen 7, 8 bilden die Lagerstellen 4; 5 für das Stirnrad sowie für das Zahnsegment des Umsetzgetriebes. Die Lagerstelle 3 für die Abtriebswelle bzw. das Hülsenteil 20 mit der Durchgangsöffnung 15 kann dabei mittels Tiefziehverfahren aus dem Lagerblech 10 gebildet sein. Möglich ist auch, die Lagerbolzen 7, 8 aus dem Blech mittels Tiefziehverfahren auszuprägen. Das fertig geformte Lagerblech 10 kann dann mit dem Getriebegehäuse 1 einfach umspritzt sein, wobei, wie in Fig. 3 gestrichelt angedeutet, in einfacher Art und Weise das Zylinderlager 9 für die Abtriebswelle eingepresst ist. Das Zylinderlager 9 kann als Sinterlager bzw. Gleitlager ausgebildet sein. Vorteilhafterweise können durch das Lagerblech 10 nun die bisher jeweils einzeln in das Getriebegehäuse 1 eingebundenen Lagerbolzen 7, 8 entfallen. Die Lagerstelle 3 für das Zylinderlager 9 bzw. das Sinterlager ist dabei stabil ausgeführt, so dass keine Relaxation bzw. Lösen des Zylinderlagers 9 auftreten kann. Es wird durch die Integration der Lagerstellen 3, 4, 5 bzw. der Verbindung innerhalb des Blechverbundes eine hohe Genauigkeit und Steifigkeit der Lagerstellen 3, 4, 5 zueinander erreicht, die auch bei hohen Lasten Bestand hat.

Die Erfindung ist nicht auf die gezeigte Ausführung beschränkt. Prinzipiell denkbar wäre es für abweichende Getriebeaufbauten auch, Lageranordnungen mit mehr als drei Getriebelagerstellen bzw. mehr oder weniger Lagerbolzen und Hülsenteilen an dem Lagerblech 10 vorzusehen.

Die Erfindung ist für Elektromotoren, insbesondere für Heckwischermotoren für Kraftfahrzeuge, vorgesehen.

## Patentansprüche

1. Elektromotor, insbesondere Heckwischermotor, mit einer Abtriebswelle und mit einem Getriebegehäuse mit Lagerstellen, **dadurch gekennzeichnet, dass** ein im Getriebegehäuse (1) eingebundenes, gemeinsames Lagerbauteil (10) die Lagerstellen (3, 4, 5) im Getriebegehäuse (1) bildet.

2. Elektromotor nach Anspruch 1, **dadurch gekennzeichnet, dass** das gemeinsame Lagerbauteil als Blechteil (10) ausgebildet ist, welches als Lagerstellen (3, 4, 5) eine Durchgangsöffnung (15) für die Abtriebswelle und zwei bolzenförmige Erhebungen (7, 8) aufweist.

3. Elektromotor nach Anspruch 2, **dadurch gekennzeichnet, dass** das Blechteil (10), insbesondere die Lagerstelle (3) für die Abtriebswelle, mittels Tiefziehverfahren hergestellt ist.

4. Elektromotor nach Anspruch 2, **dadurch gekennzeichnet, dass** in der Durchgangsöffnung (15) für die Abtriebswelle bzw. in einem Hülsenteil (20) das Zylinderlager (9) verpresst ist.

5. Elektromotor nach einem der vorhergehenden Ansprüche 1 bis 4, **dadurch gekennzeichnet, dass** das gemeinsame Lagerbauteil (10) eingebettet bzw. umspritzt in das Getriebegehäuse (1) eingebracht ist.
